# EUROPÄISCHE PATENTSCHRIFT

(11) **EP 2 179 839 B1**
(45) Veröffentlichungstag und Bekanntmachung des Hinweises auf die Patenterteilung: **14.02.2018**
(21) Anmeldenummer: 09158203.1
(22) Anmeldetag: 20.04.2009
(51) Int. Cl.: B29C 70/38, B29C 70/44, B29C 70/34, B25J 15/00, B25J 15/06

(54) **Vorrichtung und Verfahren zur Herstellung faserverstärkter Bauteile**
Device and process for the production of fibre-reinforced components
Dispositif et procédé pour la fabrication de composants renforcés en fibres

(30) Priorität: 11.07.2008 DE 102008032574
(43) Veröffentlichungstag der Anmeldung: 28.04.2010
(73) Patentinhaber: Broetje-Automation GmbH, 26180 Rastede (DE)
(72) Erfinder: Reinhold, Raphael, 26409, Wittmund (DE); Jürgens, Stefan, 26129, Oldenburg (DE)
(74) Vertreter: Gottschald, Jan

(56) Entgegenhaltungen:
- EP-A1- 0 577 505
- DE-A1- 10 152 232
- US-A- 4 475 976
- US-A- 5 092 954

## Beschreibung

Die vorliegende Erfindung betrifft eine Vorrichtung und ein Verfahren insbesondere zur Verwendung bei der Herstellung von faserverstärkten Bauteilen.
In vielfältigen technischen Bereichen, wie beispielsweise bei Maschinen, Anlagen und auch bei der Herstellung von Fahrzeugen werden zunehmend Bauteile aus Faserverbund-Materialien eingesetzt, da solche Bauteile insbesondere Gewichtsvorteile mit sich bringen. Faserverstärkte Bauteile können als Verstärkungsmaterial kohlefasern, Glasfasern oder sonstige bekannte Verstärkungsmaterialien enthalten, die als Rovings bzw. Faserbündel um entsprechende Kerne gewickelt werden oder die in Form von Fasergeflechten oder insbesondere Fasergewebematten an entsprechend ausgebildete Formkerne drapiert werden, um die gewünschte Bauteilform herzustellen.
Dabei ist es sowohl möglich, sogenannte Prepregs zu verwenden als auch trockene Fasergewebe, die anschließend mit einem als Matrixmaterial dienenden Harz bestrichen oder gefüllt werden. Beispielsweise kann eine Form geschlossen und anschließend Vakuum an die Form angelegt werden, wodurch ein flüssiges Harz in das Innere der Form eingesaugt wird, wo es die dort vorhandenen Fasergewebematten tränkt, sodass nach der Aushärtung das gewünschte Bauteil aus einem faserverstärkten Kunststoff zur Verfügung steht. Als Matrixmaterialien eignen sich z.B. duroplastische und auch thermoplastische Werkstoffe.

Nachteilig bei den bekannten Vorrichtungen und Verfahren zur Herstellung faserverstärkter Bauteile ist der hohe manuelle Aufwand, der betrieben werden muss, da die Faserlagen oftmals einzeln per Hand auf die Form aufgelegt werden.

In der EP 0 577 505 A1 ist eine Vorrichtung zur Verwendung bei der Herstellung faserverstärkter Bauteile beschrieben, gemäß dem Oberbegriff des Anspruchs 1. Ein Verfahren gemäß dem Oberbegriff des Anspruchs 15 ist auch beschrieben. Mit der DE 10 2006 046 624 A1 ist eine Vorrichtung und ein Verfahren zum Transportieren von Gegenständen, wie insbesondere biegeschlaffen Bauteilen wie Carbonfasermatten oder dergleichen bekannt geworden, womit mehrere Carbonfasennatten nacheinander formgerecht gegriffen und zu einem Formkern transportiert werden, wo sie abgelegt werden.
Dieser bekannte Stand der Technik erleichtert durch den automatischen Transport der einzelnen Fasergewebelagen die Herstellung faserverstärkter Bauteile. Trotz der Automatisierung der Ablage der einzelnen Fasergewebelagen ist aber noch eine Vielzahl von manuellen Schritten bei der Herstellung von faserverstärkten Bauteilen nötig

Es ist deshalb die Aufgabe der vorliegenden Erfindung, eine verbesserte Vorrichtung und ein verbessertes Verfahren zur Verwendung bei der Herstellung von faserverstärkten Bauteilen zur Verfügung zu stellen, womit der manuelle Aufwand bei der Herstellung sinkt.

Die Aufgabe wird gelöst durch eine Vorrichtung mit den Merkmalen des Anspruchs 1. Das erfindungsgemäße Verfahren ist Gegenstand des Anspruchs 15, Vorteilhafte Ausgestaltungen und Merkmale der Erfindung sind Gegenstand der Unteransprüche. Weitere Vorteile und vorteilhafte Merkmale ergeben sich aus der Beschreibung des Ausfuhrungsbeispiels.
Die erfindungsgemäße Vorrichtung zur Verwendung bei der Herstellung faserverstärkter Bauteile umfasst wenigstens einen positionierbaren Grundrahmen, wobei an dem Grundrahmen eine steuerbare Halteeinrichtung zum Erfassen und Halten wenigstens einer Verstärkungsfaserlage vorgesehen ist. Weiterhin ist an dem Grundrahmen eine Drapiereinrichtung vorgesehen, mit welcher die Verstärkungsfaserlage über Anlegen eines Vakuums an einen Formkern drapierbar ist, wobei die Drapiereinrichtung eine dehnbare Drapierlage umfasst, und, wobei die Drapierlage zwischen einer Ruheposition und einer an der Unterseite des Grundrahmens angeordneten Arbeitsposition verfahrbar ist. In eitler einfachen Ausgestaltung der Erfindung ist die Vorrichtung als Grundrahmen ausgebildet. Möglich ist es aber auch, dass die Vorrichtung außer der Grundrahmen noch weitere Bestandteil umfasst.
Die erfindungsgemäße Vorrichtung hat viele Vorteile. Ein erheblicher Vorteil der erfindungsgemäßen Vorrichtung zur Verwendung bei der Herstellung faserverstärkter Bauteile ist, dass nicht nur ein einfacher Transport von Verstärkungsfaserlagen möglich ist, sondern dass auch das Drapieren der Verstärkungsfaserlagen an einem Formkern gleich mit durchgeführt werden kann. Dadurch wird ein erheblicher Anteil manueller Arbeit eingespart.

Ein weiterer erheblicher Vorteil der erfindungsgemäßen Vorrichtung ist, dass über ein Anlegen von Vakuum die Verstärkungsfaserlage an den Formkern drapiert wird. Dadurch wird die Drapierung unterschiedlichster Formen möglich, unabhängig von der Gestalt der Halteeinrichtung oder von der Gestalt des Grundrahmens. Durch ein Anlegen von Vakuum zwischen der Drapiereinrichtung und dem Formkern werden die Verstärkungsfaserlagen dicht an einen grundsätzlich beliebig gestalteten Formkern drapiert. Dadurch wird auch die Herstellung von Bauteilen möglich, bei denen Hinterschnitte an dem Formkern auftreten können. Gegebenenfalls können Einweg-Formkerne oder mehrteilige Formkerne verwendet werden.

Der Grundrahmen kann als Tragrahmen ausgebildet sein, an dem die anderen Komponenten gehalten bzw. gelagert sind.

Vorzugsweise ist die steuerbare Halteeinrichtung gegenüber dem Grundrahmen verstellbar und insbesondere höhenverstellbar angeordnet, Dadurch ist es möglich, die Halteeinrichtung gegenüber dem Grundrahmen zwischen einer Grundposition und einer Halteposition zu bewegen. Insbesondere steht die Halteeinrichtung in der Halteposition nach unten über den Grundrahmen hinaus, während vorzugsweise die Halteeinrichtung in der Grundposition im Inneren des durch den Grundrahmen aufgespannten Volumens angeordnet ist.

Durch eine höhenverstellbare Halteeinrichtung wird es beispielsweise ermöglicht, dass der Grundrahmen über einer zu erfassenden Verstärkungsfaserlage im geringen Abstand positioniert wird, wobei anschließend die Halteeinrichtung gegenüber dem Grundrahmen verfahren wird, um die Verstärkungsfaserlage aufzunehmen und zu halten, sodass ein Transport zu beispielsweise einem Formkern möglich ist.

In einer bevorzugten Weiterbildung der Erfindung umfasst die steuerbare Halteeinrichtung eine Vielzahl von Saugeinrichtungen und/oder Greifeinrichtungen, die wenigstens gruppenweise separat ansteuerbar sind. Es ist auch möglich, dass alle oder im Wesentlichen alle, Saug- bzw. Greifeinrichtungen separat ansteuerbar sind. Ein erheblicher Vorteil von einzeln oder gruppenweise ansteuerbaren Saugeinrichtungen bzw. Greifeinrichtungen ist, dass nahezu beliebig geformte Zuschnitte von Verstärkungsfaserlagen ergriffen werden können, während die Bereiche um den zu verwendenden Zuschnitt herum durch die nicht aktivierten Saugeinrichtungen bzw. Greifeinrichtungen nicht erfasst werden. Dadurch werden sehr flexibel gestaltbare Zuschnitte verwendbar.

Als Greifeinrichtung können beispielsweise Nadelgreifer eingesetzt werden, mit denen Nadeln schräg auf die zu ergreifende Verstärkungsfaserlage aufgesetzt werden, sodass sich durch die schräg in die Verstärkungsfaserlage eintauchenden Nadeln ein zuverlässiger Halt einer Verstärkungsfaserlage an dem Nadelgreifer ergibt.

Alternativ zu einem Nadelgreifer kann auch ein Gefriergreifer eingesetzt werden, bei dem ein Peltierelement vorgesehen ist, um einen Wassertropfen zu gefrieren. Befindet sich der Wassertropfen an der Grenzfläche zwischen der Verstärkungsfaserlage und dem Gefriergreifer so führt ein Gefrieren des Wassertropfens dazu, dass die Verstärkungsfaserlage fest an dem Gefriergreifer anliegt. Durch einen nachfolgenden Tauvorgang, der beispielsweise über entsprechende Heizelemente unterstützt werden kann, kann die Verbindung wieder gelöst werden.

Besonders bevorzugt werden Saugeinrichtungen eingesetzt, bei denen insbesondere Flachsauger mit einer Dichtlippe eingesetzt werden, um die Verstärkungsfaserlagen zu ergreifen bzw. anzusaugen. Besonders bevorzugt weisen die Flachsauger einen Faltenbalg oder dergleichen auf. Dadurch wird eine bessere Dämpfung und ein Lageausgleich ermöglicht. So können z.B. Verstärkungsfaserlagen noch sicher gegriffen bzw. erfasst werden, die um 15° geneigt zum Lot ausgerichtet sind.

Zur Erzeugung des benötigten Vakuums wird insbesondere eine Mehrzahl an Vakuumpumpen eingesetzt, wobei die einzelnen Vakuumpumpen bevorzugterweise mit Druckluft betrieben werden und über den Bemoullieffekt Vakuum erzeugen. Ein erheblicher Vorteil solcher Vakuumpumpen liegt in der ortsnahen Erzeugung des Vakuums, wodurch Vakuumverluste über lange Leitungen vermieden werden. Außerdem ist Druckluft in industriellen Umgebungen meist schon vor Ort vorhanden, sodass die Anforderungen an die elektrischen Anschlüsse geringer sind, Weiterhin ist der Einsatz solcher Vakuumerzeuger auch sehr vorteilhaft, da über Druckluft betriebene Vakuumpumpen weniger Geräuschentwicklung verursachen als klassische Vakuumpumpen. Außerdem kann das benötigte Vakuum leicht und individuell angepasst werden, während konventionelle Vakuumerzeuger zur Leistungsregelung beispielsweise frequenzgeregeit werden müssen, was den technischen und finanziellen Aufwand erhöht. Um bei konventionellen Vakuumerzeugern zusätzlich die Geräusche zu dämmen, werden oft kostenintensive Gehäuse zur Dämmung eingesetzt.

Vorschlagsgemäß umfasst die Drapiereinrichtung wenigstens eine dehnbare Drapierlage, die zwischen wenigstens einer Ruheposition und wenigstens einer Arbeitsposition verfahrbar vorgesehen ist. Besonders bevorzugt ist die dehnbare Drapierlage in einer Arbeitsposition an der Unterseite des Tragrahmens angeordnet, während, die dehnbare Drapierlage in einer Ruheposition die Unterseite des Tragrahmens wenigstens teilweise freigibt.

Besonders bevorzugt ist die dehnbare Drapierlage als aufwickelbare Drapiermembran ausgebildet. In der Ruheposition wird die Drapiermembran bzw. Drapierlage aufgewickelt und nimmt so wenig Platz ein. Die Dehnbarkeit der dehnbaren Drapierlage ist vorzugsweise hoch und kann 100 %, 200 %, 400 % oder auch 800 % betragen. Das Ausmaß der Dehnbarkeit hängt von dem eingesetzten Material für die Draptermembran und vom vorgesehenen Einsatzzweck ab.

In bevorzugten Ausgestaltungen ist die Drapiermembran aus Silikon bzw, einem silikonhaltigen Werkstoff gefertigt, sodass insbesondere hohe Dehnbarkeiten zwischen etwa 200 % und 600 % und besonders bevorzugt Dehnbarkeiten von etwa 400 % möglich sind.

Durch eine dehnbare Drapierlage wird eine flexible Drapierung von Verstärkungsfaserlagen auf einem Formkern möglich. Die Drapierung kann beispielsweise schon erreicht werden, in dem der Grundrahmen auf den Formkern abgesenkt wird, sodass sich die dehnbare Drapierlage an den Formkern anpasst. Eine vollständige Anlage der dehnbaren Drapierlage bzw, der aufwickelbaren Drapiermembran kann durch Anlage eines Vakuums erzielt werden, wodurch die Drapiermembran zu dem Formkern hingesaugt wird und sich dort vollständig anlegt.

Vorzugsweise sind an der Unterseite des Grundrahmens ein Vakuumkanal und/oder Vakuumbohrungen zur Fixierung der Drapierlage vorgesehen. Wenn die Drapierlage zu der Arbeitsposition an der Unterseite des Grund- bzw. Tragrahmens verfahren wird, kann durch Anlage von Vakuum an den Vakuumkanal bzw. die Vakuumbohrungen die Drapierlage an der Unterseite des Grundrahmens fixiert werden, sodass sich die dehnbare Drapierlage bei dem Absenken auf einen Formkern entsprechend dehnt und sich an die Form des Formkerns anpasst.

In vorteilhaften Weiterbildungen ist ein Formtisch vorgesehen, der eine Arbeitsfläche aufweist, auf der insbesondere verteilt Löcher angeordnet sind.
insbesondere ist an dem Formtisch unterhalb der Arbeitsfläche ein Evakuierbereich vorgesehen, der mit einem Vakuum beaufschlagbar ist, sodass die Evakuierungslöcher in der Arbeitsfläche die in dem Evakuierbereich vorhandene Luft absaugen und somit eine Anlegen der Verstärkungsfaserlage an den Formkern bewirken. Gegebenenfalls kann die Arbeitsfläche in der Umgebung des Formkerns auch als Formfläche eingesetzt werden. Dann können über die Löcher bzw. Evakuierungslöcher die Verstärkungsfaserlagen in der Umgebung des Formkerns auf die Arbeitsfläche gesaugt werden, sodass sie dort einen Rand bilden, der nach der Fertigstellung des Bauteils z.B. ganz oder teilweise entfernt wird.

In besonders bevorzugten Ausgestaltungen und Weiterbildungen der Erfindung ist wenigstens ein Formkern vorgesehen, der insbesondere hohl ausgebildet ist, um das Innere des Formkerns mit Vakuum zu beaufschlagen, wobei auf wenigstens einer Oberseite oder Seite des Formkerns Löcher oder Schlitze vorgesehen sind, um das im Inneren des Formkerns bzw. darunter vorhandene Vakuum auf die Oberseite oder die Seitenflächen des Formkerns zu übertragen. Der Einsatz von hohlen Formkernen oder mit Evakuierungsbohrungen oder Kanälen versehenen Formkernen ist besonders vorteilhaft, da dadurch eine Weiterleitung des im Evakuierbereich des Formtischs angelegten Vakuums an den Formkern und an das oberhalb des Formkerns angeordnete Volumen möglich ist.

Bei einer auf den Formkern absenkbaren Drapiereinrichtung, bei der der Evakuierbereich evakuierbar ist und bei der auf der Oberseite des hohlen Formkerns Löcher oder Schlitze vorgesehen sind, wird eine oberhalb des Formkerns angeordnete Drapierlage durch das Vakuum an den Formkern angesaugt, sodass sich eine automatische Drapierung der Verstärkungsfaserlagen ergibt. Die Drapierung kann insbesondere noch dadurch verstärkt werden, dass die Drapiereinrichtung mit der Drapierlage auf den Formkern abgesenkt wird und die dehnbare Drapierlage an den Formkern angesaugt wird.

In besonders bevorzugten Weiterbildungen ist wenigstens eine Heizeinrichtung vorgesehen, welche insbesondere mehrere Heizeinheiten umfasst. Die einzelnen Heizeinheiten der Heizeinrichtung können separat steuerbar sein, um eine gezielte Temperierung zu ermöglichen. Es ist in allen Ausgestaltungen aber bevorzugt, dass die Heizeinheiten bereichsweise oder insgesamt steuerbar sind.

Vorzugsweise ist die Heizeinrichtung gegenüber der Halteeinrichtung höhenverstellbar vorgesehen. Dabei kann es möglich sein, dass die Heizeinrichtung an dem Grundrahmen oder an der Halteeinrichtung angeordnet ist. Insbesondere ist die Heizeinrichtung derart verstellbar angeordnet, dass die Heizeinrichtung in einer ersten Position hinter der Halteeinrichtung angeordnet ist und sich in einer zweiten Position vor der Halteeinrichtung befindet. Dadurch wird es ermöglicht, dass die Heizeinrichtung in der zweiten Position im Wesentlichen nicht die Halteeinrichtung aufheizt, sondern beispielsweise eine Verstärkungsfaserlage, die auf einem Formkern abgelegt wurde. Es ist möglich, dass die Heizeinrichtung sowohl in der einen als auch in der anderen Position zur Aufheizung verwendet wird.

In der Position hinter der Halteeinrichtung kann beispielsweise eine Faserverstärkungslage schon während des Transports und während des Haltens der Faserverstärkungslage durch die Heizeinrichtung aufgeheizt werden, während die Heizeinrichtung nach dem Ablegen der Faserverstärkungslage auf dem Formkern vor die Halteeinrichtung verbracht wird, um die Verstärkungsfaserlage gezielt weiter aufzuheizen.

In einer bevorzugten Weiterbildung ist wenigstens ein Positionssensor und wenigstens ein Abstandssensor an dem Grundrahmen vorgesehen. Darüber kann die Position und der Abstand des Grundrahmens zu einer anderen Einrichtung erfasst werden. Beispielsweise kann die Position und der Abstand zu einem Zuschneidetisch oder zu dem Formtisch über einen Positions- und einen Abstandssensor erfasst und gesteuert werden.

In allen Ausgestaltungen ist es bevorzugt, dass wenigstens eine Positioniereinrichtung zur Positionierung des Grundrahmens vorgesehen ist. Dabei kann die Positionierung manuell oder automatisch erfolgen. Es ist der Einsatz eines XYZ-Positioniersystems möglich oder die Verwendung einer Robotereinrichtung, die an den Grundrahmen angekoppelt ist und die Bewegung des Grundrahmens entsprechend steuert. Bei Verwendung einer Robotereinrichtung kann beispielsweise ein Industrieroboter eingesetzt werden.
Das erfindungsgemäße Verfahren wird bei der Herstellung von faserverstärkten Bauteilen eingesetzt und unter Verwendung eines positionierbaren Grundrahmens durchgeführt. An dem positionierbaren Grundrahmen ist eine steuerbare Halteeinrichtung vorgesehen, mit der eine oder mehrere Verstärkungsfaserlagen einzelnen oder gleichzeitig erfasst und gehalten werden. Bei dem erfindungsgemäßen Verfahren wird mit einer an dem Grundrahmen vorgesehenen Drapiereinrichtung die Verstärkungsfaserlage nach dem Ablegen auf einen Formkern direkt durch Anlegen von Vakuum drapiert, wobei die Drapiereinrichtung eine dehnbare Drapierlage umfasst, und, wobei die Drapierlage zwischen einer Ruheposition und einer an der Unterseite des Grundrahmens angeordneten Arbeitsposition verfahren wird. Auch das erfindungsgemäße Verfahren hat viele Vorteile, wobei ein erheblicher Vorteil darin besteht, dass die Verstärkungsfaserlagen einzeln oder zu mehreren gleichzeitig erfasst und drapiert werden können. Dadurch, dass durch Anlegen von Vakuum das Drapieren unterstützt oder bewirkt wird, kann eine besonders flexible Formgebung erfolgen.
In Weiterbildungen des Verfahrens werden einzelne Verstärkungsfaserlagen oder jeweils mehrere Verstärkungsfaserlagen in nacheinanderfolgenden Schritten auf einem Formkern abgelegt Dazu wird über insbesondere als Vakuumgreifer ausgebildete Greifer jeweils eine Verstärkungsfaserlage oder mehrere gleichzeitig auf einem Zuschneidetisch ergriffen und zu einem Formtisch transportiert, wo die Verstärkungsfaserlagen auf dem Formkern abgelegt werden. Daraufhin können die Vakuumgreifer eingezogen werden und es wird eine dehnbare Drapierlage einer Drapiereinrichtung auf der Unterseite des Grundrahmens positioniert, bevor der Grundrahmen auf den Formkern abgesenkt wird, wodurch die dehnbare Drapierlage sich über den Formkern dehnt.

Durch Anlage eines Vakuums im Bereich des Formkerns saugt sich die dehnbare Drapierlage an den Formkern an, sodass die Verstärkungsfaserlage an den Formkern drapiert wird. Wenn die Verstärkungsfaserlagen beispielsweise einen geringen Anteil eines thermoplastischen Matrixmaterials enthalten, kann durch Zugabe von Wärme das Matrixmaterial angeschmolzen werden, sodass sich eine stabile Formlage der Verstärkungsfaserlage schon beim Drapieren ergibt.

Weitere Vorteile und Merkmale der vorliegenden Erfindung ergeben sich aus dem Ausführungsbeispiel, das im Folgenden mit Bezug auf die beiliegenden Figuren erläutert wird.

In den Figuren zeigen:
- Figur 1: eine Gesamtansicht einer erfindungsgemäßen Vorrichtung;
- Figur 2: eine perspektivische Ansicht eines Grundrahmens der Vorrichtung nach Fig. 1;
- Figur 3: eine Unteransicht des Grundrahmens nach Fig. 2;
- Figur 4: die Halteeinrichtung des Grundrahmens nach Fig. 2;
- Figur 5: die Heizeinrichtung des Grundrahmens nach Fig. 2:
- Figur 6: die Drapiereinrichtung an einem schematisch dargestellten Grundrahmen;
- Figur 7: einen Formtisch der Vorrichtung nach Fig. 1 mit leicht auseinander gezogenen Komponenten;
- Figur 8: einen Formkern zur Herstellung faserverstärkter Bauteile:
- Figur 9: die Aufnahme und den Transport einer Verstärkungsfaserlage mit dem Grundrahmen;
- Figur 10: die Ablage einer Verstärkungsfaserlage auf einem Formkern und die Aktivierung der Drapiertage;
- Figur 11: die Drapierung der Drapierlage an einem Formkern; und
- Figur 12: das Abheben des Grundrahmens von dem Formkern und die erneute Ausgangsstellung über einer weiteren Faserverstärkungslage,

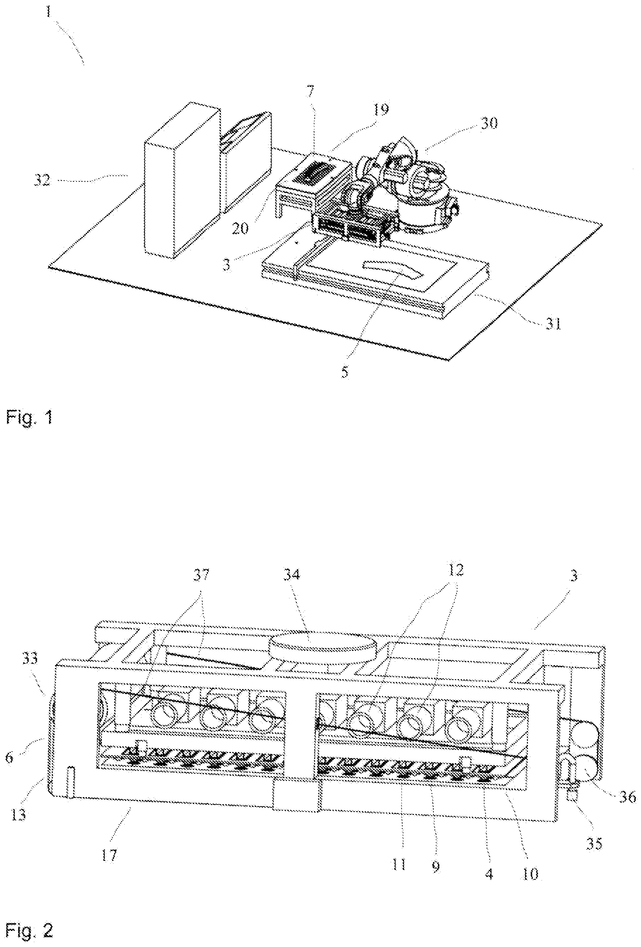

Mit Bezug auf die Figuren 1 - 12 wird im Folgenden ein Ausführungsbeispiel der vorliegenden Erfindung erläutert

Figur 1 zeigt dabei in einer perspektivische Gesamtansicht eine erfindungsgemäße Vorrichtung 1 zur Verwendung bei der Herstellung von faserverstärkten Bauteilen 2. In einer einfachen Ausführungsform besteht die erfindungsgemäße Vorrichtung 1 nur aus dem erfindungsgemäßen Grundrahmen 3. Im hier beschriebenen Ausführungsbeispiel umfasst die erfindungsgemäße Vorrichtung 1 neben dem erfindungsgemäßen Grundrahmen 3 noch weitere Komponenten.

In Fig. 1 ist ein Schneidetisch 31 abgebildet, auf dem die gewünschten Zuschnitte aus Verstärkungsfaserlagen 5 automatisch herstellbar sind. Dazu kann die beispielsweise als endlose Gewebematte vorliegende Verstärkungsfaserlage 5 jeweils von einer Rolle abgewickelt werden und über geeignete Schneidmittel wird die gewünschte Form und Größe einer Verstärkungsfaserlage ausgeschnitten.

Mittels einer insbesondere als Positionierroboter ausgeführten Positioniereinrichtung 30, an der ein Grundrahmen 3 angekoppelt ist, wird die Verstärkungsfaserlage 5 gezielt angesaugt und somit ergriffen, wenn sich der Grundrahmen 3 direkt oberhalb der Verstärkungsfaserlage 5 befindet. Zum Ergreifen des Ausschnitts weist der Grundrahmen 3 eine Halteeinrichtung 4 auf (vgl. Fig. 2), die über eine Vielzahl von Saugeinrichtungen 9 verfügt, die jeweils einzeln oder wenigstens gruppenweise ansteuerbar sind, um die gewünschte Form einer ausgeschnittenen Verstärkungsfaserlage 5 gezielt ergreifen zu können.

Nach dem Aufnehmen einer Verstärkungsfaserlage 5 verfährt die Positioniereinrichtung 30 den Grundrahmen 3 zu einem Formtisch 19, der eine Arbeitsfläche 20 aufweist, auf der hier ein Formkern 7 angeordnet ist.

Der Grundrahmen 3 wird oberhalb des Formkerns 7 positioniert und auf den Formkern abgesenkt, wo die Halteinrichtung 4 den Ausschnitt der Verstärkungsfaserlage 5 freigibt, sodass sich die Verstärkungsfaserlage 5 auf den Formkern 7 ablegt. Im Anschluss daran kann eine zweite Verstärkungsfaserlage 5 geholt werden oder es wird die Verstärkungsfaserlage 5 direkt an den Formkern 7 drapiert.

Zur Steuerung des Prozesses dient eine Steuerung 32, an der auch ein Bedienpult vorgesehen sein kann.

Der in Fig. 2 in einer leicht perspektivischen Darstellung gezeigte Grundrahmen 3 verfügt über einen Anschluss 34, mit dem der Grundrahmen an eine Positioniereinrichtung 30 gekoppelt werden kann, um ein automatisches Positionieren des Grundrahmens 3 zu ermöglichen.

An dem Grundrahmen 3 ist eine Drapiereinrichtung 6 vorgesehen, die über eine Drapierlage 13 verfügt, die in der in Fig. 2 dargestellten Ruheposition 14 im Wesentlichen auf einer Rolle 33 aufgewickelt ist. Die Drapierlage 13 ist über eine Zugleiste 42 mit Zugseilen 37 und Umlenkrollen 36 verbunden, sodass bei einer Abwicklung der dehnbaren Drapierlage 13 von der Rolle 33 sich die dehnbare Drapierlage 13 bzw. die Drapiermembran 16 über die Zugleiste 42 von den Zugseilen 37 auf die Unterseite 17 des Grundrahmens 3 gezogen wird.

Die Halteeinrichtung 4 mit den Saugeinrichtungen 9 und den jeweils einzelnen Flachsaugern 11 ist in Fig. 2 in der Grundposition 10 dargestellt, in der sich die Halteeinrichtung 4 insgesamt innerhalb des von dem Grundrahmen 3 aufgespannten Volumens befindet. Die einzelnen Saugeinrichtungen 9 werden über mehrere Vakuumpumpen 12 mit Vakuum versorgt. Dabei sind die einzelnen Vakuumpumpen 12 als mit Druckluft betriebene Vakuumpumpen 12 ausgeführt, die über den Bernouleffekt Vakuum erzeugen. Solche Vakuumpumpen sind einfach steuerbar und erzeugen das benötigte Vakuum ortsnah mit nur relativ geringer Geräuschbelästigung.

An dem Grundrahmen 3 kann weiterhin eine Vakuumkupplung 35 vorgesehen sein, die das in den Vakuumpumpen 12 erzeugte Vakuum insbesondere auch über ein entsprechendes Kupplungsstück an den Formtisch 19 überträgt, sodass an dem Formtisch 19 gegebenenfalls keine separate Vakuumversorgung vorgesehen sein muss.

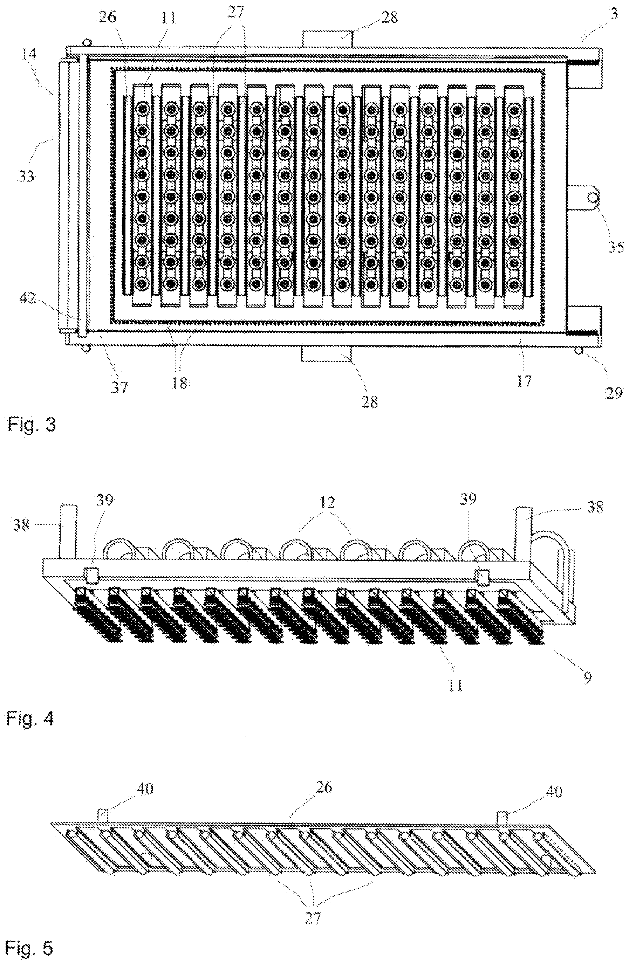

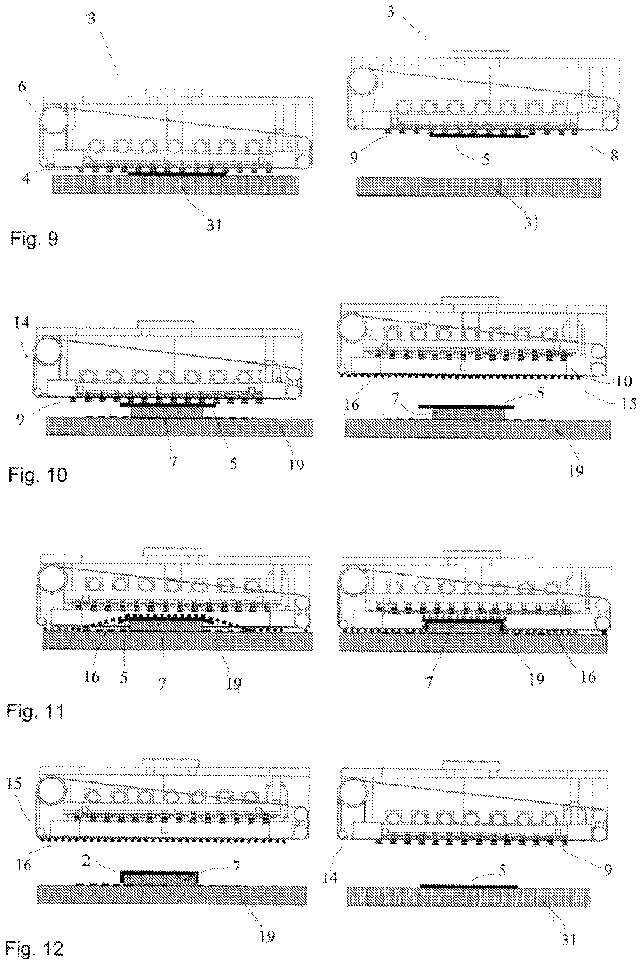

Figur 3 zeigt den Grundrahmen 3 in einer Unteransicht, wobei auf der Unterseite 17 des Grundrahmens 3 umlaufend Löcher 18 vorgesehen sind, die mit einem Vakuum beaufschlagbar sind, um die Drapierlage 13 anzusaugen, wenn sich die Drapierlage 13 in der Arbeitsposition 15 befindet, die beispielsweise in Fig. 11 dargestellt ist. In Fig. 3 ist die Ruheposition 14 der Drapierlage 13 dargestellt, in der die Drapierlage 13 bzw. die Drapiermembran 16 im Wesentlichen auf die Rolle 33 aufgewickelt ist.

Hier ist auf der Unterseite des Grundrahmens 3 die Zugleiste 42 deutlich erkennbar, die am Ende der Drapierlage 13 angeordnet ist und die mit den umlaufenden Zugseilen 37 verbunden ist, um die Drapierlage 13 automatisch zwischen der Ruheposition 14 und der Arbeitsposition 15 zu bewegen.

In Fig. 3 sind auch die Halteeinrichtung 4 und die Heizeinrichtung 26 sichtbar, wobei die Heizeinrichtung 26 über Heizeinheiten 27 mit Reflektorblechen verfügt. Die Heizeinheiten 27 sind mit der Heizeinrichtung 26 insgesamt gegenüber der Halteeinrichtung 4 höhenverstellbar angeordnet.

Positionssensoren 28 und Abstandssensoren 29 erfassen jeweils die genaue Lage des Grundrahmens 3 zu dem Schneidetisch 31 und/oder zu dem Formtisch 19, um den Grundrahmen 3 positionsgenau steuern zu können.

In Figur 4 ist die Halteeinrichtung 4 des Grundrahmens 3 nach Fig. 3 perspektivisch dargestellt. Die Flachsauger 11 aufweisenden Saugeinrichtungen 9 bzw. die Halteeinrichtung 4 ist über höhenverstellbare Träger 38 an dem Grundrahmen 3 angeordnet. Gleichfalls sind die Vakuumpumpen 12 an der Halteeinrichtung angeordnet, um ortsnah das benötigte Vakuum zur Verfügung zu stellen.

Hier im Ausführungsbeispiel sind an der Halteeinrichtung 4 Aufnahmen 39 für die Heizeinrichtung 26 vorgesehen, mittels derer die in Figur 5 perspektivisch dargestellte Heizeinrichtung 26 an den höhenverstellbaren Trägern 40 aufgenommen ist. Durch die Höhenverstellbarkeit wird gewährleistet, dass die Heizeinrichtung 26 zwischen einer ersten oberhalb der Halteeinrichtung 4 angeordneten Position und einer zweiten unterhalb der Flachsauger 11 der Halteeinrichtung 4 angeordneten Position verfahrbar vorgesehen ist. Dadurch wird es ermöglicht, dass eine unterhalb der Flachsauger 11 angeordnete Heizeinrichtung eine gegebenenfalls schädliche Aufheizung der Flachsauger 11 vermeidet, wenn die Heizeinrichtung die Verstärkungslage 5 aufheizt.

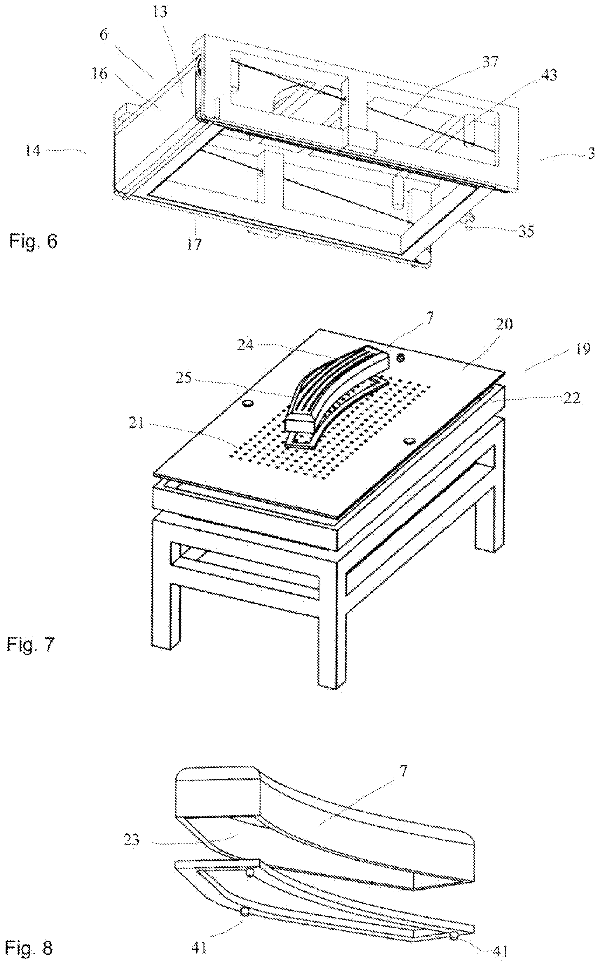

In Figur 6 ist eine schematische Darstellung des Grundrahmens 3 wiedergegeben, an dem die Drapiereinrichtung 6 angeordnet ist. Die als Drapiermembran 16 ausgeführte Drapierlage 13 kann von der in Figur 6 dargestellten Ruheposition 14 in eine Arbeitsposition 15 überführt werden, in der die Drapiermembran 16 an der Unterseite 17 des Grundrahmens 3 anliegt.

Klar erkennbar in der Darstellung nach Fig. 6 sind auch die Aufnahmen 43 zur Höhenverstellbarkeit der Halteeinrichtung 4.

Figur 7 zeigt den Formtisch 19, bei dem die einzelnen Komponenten in vertikaler Richtung leicht auseinander gezogen dargestellt sind, um einen Überblick über den Aufbau des Formtischs 19 zu ermöglichen. Der Formtisch 19 verfügt über eine Arbeitsfläche 20, die in einem zentralen Bereich mit einer Vielzahl von Löchern 21 versehen ist.

Auf der Arbeitsfläche 20 ist ein hohler Formkern 7 angeordnet, auf dessen Oberseite 24 Schlitze 25 vorgesehen sind. Über die Schlitze 25 und den hohlen Formkern 7 kann das im Evakuierbereich 22 angelegte Vakuum auf die Oberseite 24 des Formkerns 7 übertragen werden, sodass bei Anlage eines Vakuums an den Evakuierbereich 22 eine sich oberhalb des Formkerns 7 befindende Verstärkungsfaserlage 5 an die Oberseite 24 des Formkerns 7 angesaugt wird.

Der Formtisch 19 kann über eine Kupplung an die Vakuumkupplung 35 des Grundrahmens 3 angekoppelt werden, um dass am Grundrahmen mittels der Vakuumpumpen 12 erzeugte Vakuum auf den Evakuierbereich 22 des Formtischs 19 zu übertragen. In anderen Ausgestaltungen ist es auch möglich, dass der Formtisch 19 über eine separate Vakuumerzeugung verfügt oder anderweitig mit Vakuum versorgt wird.

Figur 8 zeigt einen hier zweiteiligen hohlen Formkern 7, der über Positionierdorne 41 in den Löchern 21 auf der Arbeitsfläche 20 des Formtisches 19 definiert positioniert werden kann. Durch das Innere 23 des hohl gestalteten Formkerns 7 und durch die Schlitze 25 auf der Oberseite 24 kann ein im Evakuierbereich 22 vorhandenes Vakuum durch den Formkern 7 hindurch auf die Oberseite 24 übertragen werden.

Ein Funktionsablauf bei der Verarbeitung von Verstärkungsfaserlagen wird im Folgenden mit Bezug auf die Figuren 9 - 12 erläutert.

In Figur 9 ist in der linken Hälfte der Grundrahmen 3 über einem Schneidetisch 31 dargestellt, wobei die Drapiereinrichtung 6 sich in der Ruheposition 14 befindet, während die Halteeinrichtung 4 in die Halteposition 8 verfahren wurde, um einen Zuschnitt einer Verstärkungslage 5 von dem Schneidetisch 31 zu ergreifen. Der Zuschnitt der Verstärkungslagen 5 erfolgt hier insbesondere automatisch.

In Figur 9 ist auf der rechten Seite dargestellt, wie die Halteeinrichtung 4 einen Zuschnitt einer Verstärkungsfaserlage 5 über Vakuum ansaugt und hält. Der Grund rahmen 3 hat von dem Schneidetisch 31 abgehoben und wird durch eine hier nicht dargestellte Positioniereinrichtung 30 zu dem Formtisch 19 verfahren.

Auf der linken Seite von Figur 10 ist dargestellt, wie der Grundrahmen 3 sich auf einen Formkern 7 des Formtischs 19 absenkt und die Verstärkungsfaserlage 5 auf dem Formkern 7 abgelegt wird. Die Drapiereinrichtung 6 befindet sich immer noch in die Ruheposition 14. Nach dem Abschalten des Vakuums an der Halteeinrichtung 4 wird die Verstärkungsfaserlage 5 auf dem Formkern 7 abgelegt und die Halteeinrichtung 4 wird von der Halteposition 8 in die Grundposition 10 überführt.

Im Anschluss daran wird die Drapiereinrichtung 6 von der Ruheposition 14 in die Arbeitsposition 15 überführt, die in Figur 10 auf der rechten Seite dargestellt ist. Die Drapierlage 16 wurde zu der Unterseite 17 des Grundrahmens 3 verfahren und liegt an der Unterseite 17 des Grundrahmens 3 an. Durch Ansaugen der Drapierlage 16 über die an der Unterseite des Grundrahmens 3 vorgesehenen Vakuumlöcher 18 wird die Drapierlage 16 fest an der Unterseite 17 des Grundrahmens 3 gehalten.

Danach wird der Grundrahmen 3 in die in Figur 11 links dargestellte Position überführt, in der der Grundrahmen 3 auf den Formkern 7 abgesenkt wurde und auf dem Formtisch 19 aufliegt. Dadurch wird die Drapiermembran 16 im Bereich des Formkerns 7 gedehnt.

Mit Anlage von Vakuum an den Evakuierbereich 22 des Formtischs 19 wird das Vakuum durch die Löcher 21 in der Arbeitsfläche 20 des Formtischs 19 und durch den hohlen Formkern 7 nach oben übertragen, sodass die Drapiermembran 16 an den Formkern 7 angesaugt wird. Die Drapiermembran 16 bewirkt, dass die Verstärkungsfaserlagen 5 an dem Formkern 7 drapiert werden, wie es in Figur 11 rechts schematisch dargestellt ist. Zur Verstärkung der Drapierungswirkung kann die Heizeinrichtung 26 während des Drapierens aktiviert werden.

Im Anschluss an das Drapieren der Verstärkungsfaserlage 5 kann der Grundrahmen 3, wie auf der linken Seite von Figur 12 dargestellt, wieder angehoben werden, wobei die Verstärkungsfaserlage 5 weiterhin an dem Formkern 7 anliegt.

Nach dem der Grundrahmen 3, wie in Figur 12 links dargestellt, von dem Formtisch 19 abgehoben hat, kann die Drapiermembran 16 wieder in die Ruheposition 14 überführt werden und der Grundrahmen 3 kann wieder zu dem Schneidetisch 31 verfahren werden, um die nächste Verstärkungsfaserlage 5 zu holen. Je nach gewünschter Zahl der Verstärkungsfaserlagen wird der zuvor beschriebene Prozess entsprechend oft wiederholt, bis der Rohling oder nach der Harzinjektion und Aushärtung das fertige Bauteil 2 entnommen werden kann.

In allen Fällen kann das beschriebene Verfahren und die erfindungsgemäße Vorrichtung bei der Herstellung von faserverstärkten Bauteilen eingesetzt werden. wobei sowohl die Verwendung sogenannter trockener Verstärkungsgewebelagen möglich ist als auch die Verwendung von Prepregs, bei denen die Verstärkungsgewebelagen mit einem Harz vorgetränkt sind.

Zusammengefasst wird bei dem erfindungsgemäßen Verfahren unter Verwendung von Trockenfasern als Verstärkungsfaserlagen der Grundrahmen 3 zunächst über einem entsprechenden Trockenfaser-Zuschnitt auf dem Schneidetisch 31 positioniert und dort abgesenkt, woraufhin das Vakuumsaugerfeld eingeschaltet wird, um eine Verstärkungsfaserlage zu erfassen.

Daraufhin kann der Grundrahmen 3 mit dem angesaugten Zuschnitt angehoben werden. Gegebenenfalls wird die Heizeinrichtung 26 direkt eingeschaltet, um die Anhaftung des Zuschnitts am Ablageort zu verbessern. Dadurch kann auch die Prozesszeit verringert werden, da das Aufheizen früher startet und schon während des Transports erfolgt.

Nach dem Transport des Zuschnitts zum Ablageort auf dem Formtisch 19 wird der Grundrahmen 3 über dem Formkern 7 positioniert und abgesenkt. Die Halteeinrichtung 4 wird deaktiviert, der Grundrahmen 3 wieder angehoben und die eventuell aktive Heizeinrichtung 26 ausgeschaltet.

Die Halteeinrichtung 4 und die Heizungseinrichtung 26 werden in eine Grundposition überführt und die Drapiermembran 16 wird ausgefahren und über Vakuumlöcher 18 an der Unterseite 17 des Grundrahmens 3 fixiert.

Daraufhin wird der Grundrahmen 3 mit der fixierten Drapiermembran 16 auf den Formtisch 19 abgesenkt, wodurch sich die Drapiermembran 16 entsprechend über dem Formkern 7 dehnt. Zusätzlich kann noch Anpressdruck durch den Grundrahmen 3 aufgebracht werden, um ein Verrutschen der Drapiermembran 16 zu verhindern.

Gleichzeitig werden der Grundrahmen 3 und der Formtisch 19 über eine automatische Vakuumkupplung gekoppelt, sodass der Vakuumbereich 22 des Formtischs 19 evakuiert wird.

Im Anschluss daran kann die Heizungseinrichtung 26 abgesenkt und eingeschaltet werden. Durch den evakuierten Vakuumbereich 22 des Formtischs 19 wird das Vakuum auf den Formkern 7 übertragen und die Drapiermembran 16 legt sich vollständig an den Formkern 7 an.

Nach beendetem Drapieren wird die Heizungseinrichtung 26 deaktiviert und angehoben. Die Vakuumkopplung zum Formtisch 19 wird aufgehoben, der Grundrahmen 3 angehoben und zum Schneidetisch 31 zurück verfahren, Diese Schritte werden wiederholt, bis die gewünschte Anzahl von Verstärkungsfaserlagen auf dem Formkern angeordnet ist.

Danach erfolgt die Aufnahme des drapierten Bauteils von dem Formkern und der Transport zu einem Aushärtewerkzeug. Dazu wird das drapierte Bauteil z.B. auf einer ersten Hälfte des Aushärtewerkzeugs abgelegt. Im Anschluss daran kann mit einer zweiten Hälfte das Werkzeug für ein Harzinjektionsverfahren verschlossen werden. Anschließend kann die Harzinjektion und die anschließende Konsolidierung im Ofen stattfinden, bevor das Werkzeug geöffnet wird. Das fertige Bauteil 2 kann durch den Grundrahmen 3 aufgenommen und weiter transportiert werden,

Für ein Harzinfustonsverfahren können benötigte Hilfsstoffe auch mit dem Grundrahmen 3 geholt werden. Hilfsstoffe können beispielsweise Saugvliese oder Abreißgewebe sein. Auch eine Vakuumfolie kann von dem Schneidetisch oder einer anderen Ablage automatisch geholt und über dem Formkern positioniert werden.

Gegebenenfalls ist es auch möglich, dass nach der Positionierung und Drapierung der Verstärkungsfaserlagen die Vakuumfolie automatisch oder auch manuell drapiert wird, an die ein Vakuum angelegt wird. Eine anschließende Harzinfusion und Konsolidierung im Ofen ist möglich, bevor der Vakuumaufbau manuell entfernt wird.

Die Verarbeitung von Prepregs ist auch möglich. Dabei kann zusätzlich ein manueller Arbeitsschritt erforderlich sein, in welchem eine Schutzfolie von dem Prepreg-Material entfernt wird. Dafür fällt der Schritt der Harzinfusion weg, da das MatrixMaterial in dem Prepreg enthalten ist. Im Übrigen unterscheidet sich der Prozess bei der Verarbeitung von Prepregs von dem oben beschriebenen Prozess des Harzinfusionsverfahrens lediglich dadurch, dass bei der Konsolidierung eines Prepreg-Bauteils an Stelle eines Ofens ein Autoklav verwendet wird.

Insgesamt ist es mit der erfindungsgemäßen Vorrichtung und mit dem erfindungsgemäßen Verfahren möglich, die erforderlichen manuellen Schritte bei der Herstellung von faserverstärkten Bauteilen erheblich zu reduzieren, sodass die Fertigung wirtschaftlicher und kostengünstiger wird. Gleichzeitig kann durch die Automatisierung die Reproduzierbarkeit erhöht werden, sodass die Qualität zunimmt.

### Bezugszeichenliste:

- 1: Vorrichtung
- 2: faserverstärktes Bauteil
- 3: Grundrahmen
- 4: Halteeinrichtung
- 5: Verstärkungsfaserlage
- 6: Drapiereinrichtung
- 7: Formkern
- 8: Halteposition
- 9: Saugeinrichtung
- 10: Grundposition
- 11: Flachsauger
- 12: Vakuumpumpe
- 13: Drapierlage
- 14: Ruheposition
- 15: Arbeitsposition
- 16: Drapiermembran
- 17: Unterseite
- 18: Vakuumbohrung
- 19: Formtisch
- 20: Arbeitsfläche
- 21: Loch
- 22: Evakuierbereich
- 23: Inneres des Formkerns
- 24: Oberseite
- 25: Schlitz
- 26: Heizeinrichtung
- 27: Heizeinheit
- 28: Positionssensor
- 29: Abstandssensor
- 30: Positioniereinrichtung
- 31: Schneidetisch
- 32: Steuerung
- 33: Rolle
- 34: Anschluss
- 35: Vakuumkupplung
- 36: Umlenkrolle
- 37: Zugseil
- 38: Höhenverstellbarer Träger
- 39: Aufnahme für Heizeinrichtung
- 40: Höhenverstellbarer Träger
- 41: Positionierungsdorn
- 42: Zugleiste
- 43: Aufnahme

## Patentansprüche

1. Vorrichtung (1) zur Verwendung bei der Herstellung faserverstärkter Bauteile (2), welche einen positionierbaren Grundrahmen (3) umfasst, wobei an dem Grundrahmen (3) eine steuerbare Halteeinrichtung (4) zum Erfassen und Halten wenigstens einer Verstärkungsfaserlage (5) vorgesehen ist, wobei an dem Grundrahmen (3) eine Drapiereinrichtung (6) vorgesehen ist, mit welcher die Verstärkungsfaserlage (5) über Anlegen eines Vakuums an einen Formkern (7) drapierbar ist, wobei die Drapiereinrichtung (6) eine dehnbare Drapierlage (13) umfasst,
**dadurch gekennzeichnet,**
**dass** die Drapierlage (13) zwischen einer Ruheposition (14) und einer an der Unterseite des Grundrahmens (3) angeordneten Arbeitsposition (15) verfahrbar ist.

2. Vorrichtung (1) nach Anspruch 1, **dadurch gekennzeichnet, dass** die steuerbare Halteeinrichtung (4) gegenüber dem Grundrahmen (3) höhenverstellbar ist und in einer Halteposition (8) nach unten über den Grundrahmen (3) hinaussteht.

3. Vorrichtung (1) nach Anspruch 1 oder 2, **dadurch gekennzeichnet, dass** die steuerbare Halteeinrichtung (4) eine Vielzahl von Saugeinrichtungen (9) und/oder Greifeinrichtungen umfasst, die wenigstens gruppenweise separat ansteuerbar sind.

4. Vorrichtung (1) nach Anspruch 1, 2 oder 3, **dadurch gekennzeichnet dass** die Halteeinrichtung (4) eine Mehrzahl an Vakuumpumpen (12) aufweist, welche über Druckluft betriehen werden und über den Bemoullieffekt Vakuum erzeugen.

5. Vorrichtung (1) nach einem der vorhergehenden Ansprüche, **dadurch gekennzeichnet, dass** die Drapierlage (13) im Wesentlichen auf einer Rolle (33) aufgewickelt ist, vorzugsweise, dass die Drapierlage (13) über eine Zugleiste (42) mit Zugseilen (37) und Umlenkrollen (36) verbunden ist, sodass bei einer Abwicklung der dehnbaren Drapierlage (13) von der Rolle (33) sich die dehnbare Drapierlage (13) über die Zugleiste (42) von den Zugseilen (37) auf die Unterseite (17) des Grundrahmens (3) gezogen wird..

6. Vorrichtung (1) nach einem der vorhergehenden Ansprüche, **dadurch gekennzeichnet, dass** an der Unterseite (17) des Grundrahmens (3) Vakuumbohrungen (18) zur Fixierung der Drapierlage (13) vorgesehen sind.

7. Vorrichtung (1) nach einem der vorhergehenden Ansprüche, **dadurch gekennzeichnet, dass** ein Formtisch (19) mit einer Arbeitsfläche (20) vorgesehen ist, wobei über der Arbeitsfläche (20) verteilt Löcher (21) angeordnet sind.

8. Vorrichtung (1) nach dem Anspruch 7, **dadurch gekennzeichnet, dass** unterhalb der Arbeitsfläche (20) des Formtischs (19) ein Evakuierbereich (22) vorgesehen ist, der mit einem Vakuum beaufschlagbar ist.

9. Vorrichtung (1) nach einem der vorhergehenden Ansprüche, **dadurch gekennzeichnet, dass** wenigstens ein Formkern (7) vorgesehen ist, der insbesondere hohl ausgebildet ist, um das Innere (23) des Formkerns (7) mit Vakuum zu beaufschlagen, wobei auf der Oberseite (24) des Formkerns (7) Löcher und/oder Schlitze (25) vorgesehen sind.

10. Vorrichtung (1) nach dem Anspruch 9, **dadurch gekennzeichnet, dass** die Drapiereinrichtung (6) auf den Formkern (7) absenkbar ist, wonach der Evakuierbereich (22) evakuierbar ist, um die Drapierlage (13) an den Formkern (7) anzulegen.

11. Vorrichtung (1) nach einem der vorhergehenden Ansprüche, **dadurch gekennzeichnet, dass** wenigstens eine Heizeinrichtung (26) vorgesehen ist, weiche mehrere Heizeinheiten (27) umfasst.

12. Vorrichtung (1) nach dem Anspruch 11, **dadurch gekennzeichnet, dass** die Heizeinrichtung (26) gegenüber der Halteeinrichtung (4) höhenverstellbar ist.

13. Vorrichtung (1) nach einem der vorhergehenden Ansprüche, **dadurch gekennzeichnet, dass** wenigstens ein Positionssensor (28) und wenigstens ein Abstandssensor (29) an dem Grundrahmen (3) vorgesehen sind.

14. Vorrichtung (1) nach einem der vorhergehenden Ansprüche, **dadurch gekennzeichnet, dass** wenigstens eine Positioniereinrichtung (30) zur Positionierung des Grundrahmens (3) vorgesehen ist.

15. Verfahren (1) zur Herstellung faserverstärkter Bauteile (2) unter Verwendung eines positionierbaren Grundrahmens (3), wobei an dem Grundrahmen (3) eine steuerbare Halteeinrichtung (4) zum Erfassen und Halten wenigstens einer Verstärkungsfaserlage (5) vorgesehen ist, wobei an dem Grundrahmen (3) eine Drapiereinrichtung (6) vorgesehen ist, mit welcher die Verstärkungsfaserlage (5) nach dem Ablegen auf einem Formkern (7) direkt durch Anlegen von Vakuum drapiert wird, wobei die Drapiereinrichtung (6) eine dehnbare Drapierlage (13) umfasst,
**dadurch gekennzeichnet, dass** die Drapierlage (13) zwischen einer Ruheposition (14) und einer an der Unterseite des Grundrahmens (3) angeordneten Arbeitsposition (15) verfahren wird.

## Claims

1. Device (1) for use in the production of fibre-reinforced components (2), said device comprising a positionable main frame (3), wherein a controllable holding installation (4) for gripping and holding at least one reinforcement fibre tier (5) is provided on the main frame (3), wherein a draping installation (6) by way of which the reinforcement fibre tier (5) by way of applying a vacuum can be draped to a moulding core (7) is provided on the main frame (3), wherein the draping installation (6) comprises an expandable draping tier (13),
**characterized in that**
the draping tier (13) is displaceable between a resting position (14) and an operating position (15) that is disposed on the lower side of the main frame (3).

2. Device (1) according to Claim 1, **characterized in that** the controllable holding installation (4) is height-adjustable in relation to the main frame (3) and in a holding position (8) projects downwards beyond the main frame (3).

3. Device (1) according to either of Claims 1 and 2, **characterized in that** the controllable holding installation (4) comprises a multiplicity of suction installations (9) and/or gripping installations which are actuatable separately or at least in groups.

4. Device (1) according to either of Claims 1, 2, and 3, **characterized in that** the holding installation (4) has a plurality of vacuum pumps (12) which are operated by compressed air and generate a vacuum by way of the Bernoulli effect.

5. Device (1) according to one of the preceding claims, **characterized in that** the draping tier (13) is wound up substantially on one roll (33), preferably **in that** the draping tier (13) by way of a traction strip (42) is connected to traction cables (35) and deflection rollers (36) such that, in the case of the expandable draping tier (13) being unwound from the roll (33), the expandable draping tier (13) by way of the traction strip (42) is pulled by the traction cables (37) to the lower side (17) of the main frame (3).

6. Device (1) according to one of the preceding claims, **characterized in that** vacuum bores (18) for fixing the draping tier (13) are provided on the lower side (17) of the main frame (3).

7. Device (1) according to one of the preceding claims, **characterized in that** a moulding table (19) having a worktop (20) is provided, wherein holes (21) are disposed so as to be distributed across the worktop (20).

8. Device (1) according to Claim 7, **characterized in that** an evacuation region (22) which is impingeable with the vacuum is provided below the worktop (20) of the moulding table (19).

9. Device (1) according to one of the preceding claims, **characterized in that** at least one moulding core (7) is provided, said moulding core (7) being in particular configured so as to be hollow in order for the interior (23) of the moulding core (7) to be impinged with a vacuum, wherein holes and/or slots (25) are provided on the upper side (24) of the moulding core (7).

10. Device (1) according to Claim 9, **characterized in that** the draping installation (6) is capable of being lowered onto the moulding core (7), upon which the evacuation region (22) is capable of being evacuated in order for the draping tier (13) to be brought to bear on the moulding core (7).

11. Device (1) according to one of the preceding claims, **characterized in that** at least one heating installation (26) which comprises a plurality of heating units (27) is provided.

12. Device (1) according to Claim 11, **characterized in that** the heating installation (26) is height-adjustable in relation to the holding installation (4) .

13. Device (1) according to one of the preceding claims, **characterized in that** at least one position sensor (28) and at least one spacing sensor (29) are provided on the main frame (3).

14. Device (1) according to one of the preceding claims, **characterized in that** at least one positioning installation (30) for positioning the main frame (3) is provided.

15. Method (1) for producing fibre-reinforced components (2) while using a positionable main frame (3), wherein a controllable holding installation (4) for gripping and holding at least one reinforcement fibre tier (5) is provided on the main frame (3), wherein a draping installation (6), by way of which the reinforcement fibre tier (5) after being placed onto a moulding core (7) is directly draped by applying a vacuum, is provided on the main frame (3), wherein the draping installation (6) comprises an expandable draping tier (13),
**characterized in that** the draping tier (13) is displaced between a resting position (14) and an operating position (15) that is disposed on the lower side of the main frame (3).

## Revendications

1. Dispositif (1) à utiliser pour la fabrication de composants renforcés par des fibres (2), qui comprend un cadre de base positionnable (3), dans lequel il est prévu sur le cadre de base (3) un dispositif de maintien réglable (4) pour saisir et maintenir au moins une couche de fibres de renforcement (5), dans lequel il est prévu sur le cadre de base (3) un dispositif de drapage (6), avec lequel la couche de fibres de renforcement (5) peut être drapée sur un noyau de formage (7) par application d'un vide, dans lequel le dispositif de drapage (6) comprend une couche de drapage extensible (13), **caractérisé en ce que** la couche de drapage (13) est déplaçable entre une position de repos (14) et une position de travail (15) disposée sur le côté inférieur du cadre de base (3).

2. Dispositif (1) selon la revendication 1, **caractérisé en ce que** le dispositif de maintien réglable (4) est réglable en hauteur par rapport au cadre de base (3) et dans une position de maintien (8) est saillant vers le bas au-delà du cadre de base (3).

3. Dispositif (1) selon la revendication 1 ou 2, **caractérisé en ce que** le dispositif de maintien réglable (14) comprend une multiplicité de dispositifs d'aspiration (9) et/ou de dispositifs de saisie, qui peuvent être commandés séparément au moins par groupes.

4. Dispositif (1) selon la revendication 1, 2 ou 3, **caractérisé en ce que** le dispositif de maintien (4) présente une multiplicité de pompes à vide (12), qui fonctionnent à l'air comprimé et qui produisent un vide par l'effet Bernoulli.

5. Dispositif (1) selon l'une quelconque des revendications précédentes, **caractérisé en ce que** la couche de drapage (13) est enroulée essentiellement sur un rouleau (33), de préférence **en ce que** la couche de drapage (13) est reliée par une règle de traction (42) à des câbles de traction (37) et des rouleaux de déviation (36), de telle manière que lors d'un déroulement de la couche de drapage extensible (13) du rouleau (33) la couche de drapage extensible (13) soit tirée par la règle de traction (42) au moyen des câbles de traction (37) sur le côté inférieur (17) du cadre de base (3).

6. Dispositif (1) selon l'une quelconque des revendications précédentes, **caractérisé en ce qu'**il est prévu sur le côté inférieur (17) du cadre de base (3) des orifices sous vide (18) pour la fixation de la couche de drapage (13)

7. Dispositif (1) selon l'une quelconque des revendications précédentes, **caractérisé en ce qu'**il est prévu une table de formage (19) avec une face de travail (20), dans lequel des trous (21) sont répartis sur la face de travail (20).

8. Dispositif (1) selon la revendication 7, **caractérisé en ce qu'**il est prévu en dessous de la face de travail (20) de la table de formage (19) une zone de mise sous vide (22), qui peut être exposée à un vide.

9. Dispositif (1) selon l'une quelconque des revendications précédentes, **caractérisé en ce qu'**il est prévu au moins un noyau de formage (7), qui est réalisé en particulier sous forme creuse, afin d'exposer l'intérieur (23) du noyau de formage (7) au vide, dans lequel il est prévu des trous et/ou des fentes (25) sur le côté supérieur (24) du noyau de formage (7).

10. Dispositif (1) selon la revendication 9, **caractérisé en ce que** le dispositif de drapage (6) peut être abaissé sur le noyau de formage (7), puis la zone de mise sous vide (22) peut être mise sous vide pour appliquer la couche de drapage (13) sur le noyau de formage (7).

11. Dispositif (1) selon l'une quelconque des revendications précédentes, **caractérisé en ce qu'**il est prévu au moins un dispositif de chauffage (26), qui comprend plusieurs unités de chauffage (27).

12. Dispositif (1) selon la revendication 11, **caractérisé en ce que** le dispositif de chauffage (26) est réglable en hauteur par rapport au dispositif de maintien (4).

13. Dispositif (1) selon l'une quelconque des revendications précédentes, **caractérisé en ce qu'**il est prévu au moins un détecteur de position (28) et au moins un détecteur de distance (29) sur le cadre de base (3).

14. Dispositif (1) selon l'une quelconque des revendications précédentes, **caractérisé en ce qu'**il est prévu au moins un dispositif de positionnement (30) pour le positionnement du cadre de base (3).

15. Procédé (1) pour la fabrication de composants renforcés par des fibres (2) en utilisant un cadre de base positionnable (3), dans lequel il est prévu sur le cadre de base (3) un dispositif de maintien réglable (4) pour saisir et maintenir au moins une couche de fibres de renforcement (5), dans lequel il est prévu sur le cadre de base (3) un dispositif de drapage (6), avec lequel la couche de fibres de renforcement (5) est drapée après son dépôt directement sur un noyau de formage (7) par application d'un vide, dans lequel le dispositif de drapage (6) comprend une couche de drapage extensible (13), **caractérisé en ce que** la couche de drapage (13) est déplacée entre une position de repos (14) et une position de travail (15) disposée sur le côté inférieur du cadre de base (3).
